# EUROPEAN PATENT SPECIFICATION

(11) **EP 2 917 704 B1**
(45) Date of publication and mention of the grant of the patent: **04.09.2024**
(21) Application number: 13795127.3
(22) Date of filing: 08.11.2013
(51) Int. Cl.: G01F 25/00, G01F 23/00, G05B 19/00, H01H 35/18, G01F 25/20

(54) **METHOD AND APPARATUS FOR VALIDATING A FIELD DEVICE IN A CONTROL SYSTEM**
VERFAHREN UND VORRICHTUNG ZUR ÜBERPRÜFUNG EINER FELDVORRICHTUNG IN EINEM STEUERUNGSSYSTEM
PROCÉDÉ ET DISPOSITIF DE VALIDATION D'UN APPAREIL DE TERRAIN DANS UN SYSTÈME DE RÉGULATION

(30) Priority: 12.11.2012 US 201213674776
(43) Date of publication of application: 16.09.2015
(73) Proprietor: Fisher Controls International LLC, Marshalltown, IA 50158 (US)
(72) Inventor: BURLAGE, Brian, J., Marshalltown, IA 50158 (US); CARTWRIGHT, Carter, Bill, Ames, IA 50010-3926 (US)
(74) Representative: Petraz, Gilberto Luigi
(86) International application number: PCT/US2013/069181
(87) International publication number: WO 2014/074839

(56) References cited:
- CH-A- 82 271
- GB-A- 667 458
- JP-A- S5 651 622
- US-A- 4 821 022

## Description

### FIELD OF THE DISCLOSURE

This disclosure relates generally to control systems and, more particularly, to a method and apparatus for validating the operability and availability of a field device within a control system.

### BACKGROUND

Control systems, which include process control systems and safety instrumented systems (SIS), typically include one or more controllers to control the process or safety system. The controllers in these systems frequently use field devices to perform a variety of functions within the control environment. For example, in a liquid level control system, the field devices may be used to monitor and/or control the amount of a liquid in a holding tank. When the level of the liquid has reached a predetermined position (high or low), the control system may respond by utilizing one of the field devices, such as a valve, to adjust the flow of liquid entering or exiting the holding tank. A float assembly checking system is described for example in the document US-A-4821022. A method and device for making measurements, the results of which are dependent on liquid status, are described for example in the document CH-A-82271. A testing device for level switch of moisture separator is described in the document JP-A-S5651622. Improvements in float-operated electric relays are described in the document GB-A-667458.

Proper maintenance of the process control system or the SIS of a process plant may include monitoring the operation of the field devices, testing the field devices, and repairing or replacing the field devices. An important concern for control personnel managing a control system is knowing whether the field devices being used are available and operational. In a level control system implementing a high-level detection application, the field device is commonly considered to be operating in a "dry" state or condition because the field device is not tripped or actuated until the level of the liquid rises to reach a high-level target or limit. The field device may therefore appear idle or static during the time the liquid level remains below the high-level target. If a movable portion of the field device is stationary or idle for an extended period of time, there is a concern that the field device will not function or may otherwise be inhibited from operating properly when the liquid does reach the high-level target. Control personnel may therefore prefer to periodically validate that the level detecting field device is operational and available.

Commonly utilized techniques to validate the operability and/or availability of a level detecting field device generally require control personnel to visit the site of the control system to replicate a rise or fall of the liquid level or simulate a level detection by the field device. One known validation technique involves changing the liquid level to engage or trip the level detecting field device and confirm that the field device is operational. However, changing the liquid level may require an extensive amount of time to raise or lower the liquid to the target level so that the field device can be tripped. Another known validation technique requires control personnel to manually manipulate the field device to simulate the tripping of the field device. However, manually manipulating the field device may not be possible with some level controllers, such as electronic devices, which are not mechanical in nature.

### SUMMARY

Example systems and methods to validate the availability and/or operability of a field device within a control plant are herein described. A float liquid level control system according to the invention is defined in the annexed independent claim 1. Other advantageous features are defined in the annexed dependent claims 2 to 8 related to the system. A method according to the invention of validating a level control system is defined in the annexed independent claim 9. Other advantageous features of the method are defined in the annexed claim 10.

### BRIEF DESCRIPTION OF THE DRAWINGS

FIG. 1 is a block diagram of an exemplary process plant having a process control system and a safety system.
FIG. 2 is a block diagram of one embodiment of the invention operatively connected to an example field device.
FIG. 3 illustrates an example module or process flow diagram to validate the operability and availability of the example field device shown in FIG. 2.
FIG. 4 is a block diagram of another embodiment of the invention operatively connected to an example field device.
FIG. 5 illustrates an example module or process flow diagram to validate the operability and availability of the example field device shown in FIG. 4.

### DETAILED DESCRIPTION

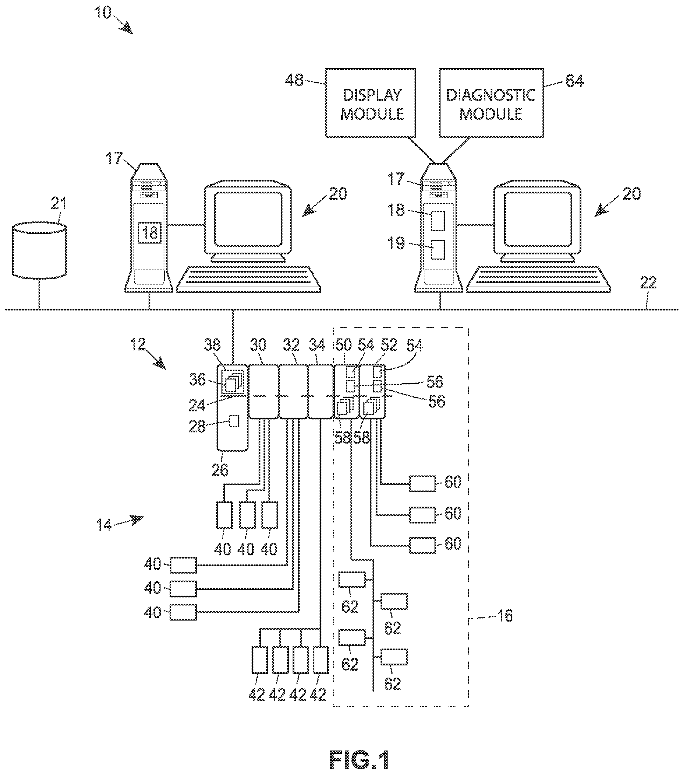

In FIG. 1, a process plant 10 is shown to include a process control/safety control node 12, which may include a process control system 14 integrated with a safety system 16 (depicted within dotted lines). The safety system 16 generally operates as a safety instrumented system (SIS) and may monitor the operation of the process control system 14 to ensure the safe operation of the process plant 10. If necessary, the safety system 16 may override control of the process control system 14.

The process plant 10 also includes one or more host workstations 17 or computing devices, which may be any type of computer, for example. Each workstation 17 may include a processor 18, memory device 19, and/or a user interface 20 such as a display monitor and/or keyboard that are accessible by control personnel. In the example process plant 10 illustrated in FIG. 1, two workstations 17 are shown connected to the process control/safety control node 12 and to an external memory device 21 via a common communication line or bus 22. The communication bus 22 may be implemented using any desired bus-based or non-bus-based hardware, hardwired or wireless communication structure, or suitable communication protocol, such as an Ethernet protocol.

The process plant 10 includes both process control system devices and safety system devices operatively connected together via the bus structure that may be provided on a common backplane 24 into which different process controllers and input/output devices are attached. The process plant 10 illustrated in FIG. 1 includes at least one process controller 26 having a processor 28 and one or more process control system input/output (I/O) devices 30, 32, 34. Each process control system I/O device 30, 32, 34 is communicatively connected to a set of process control related field devices, illustrated in FIG. 1 as controller field devices 40, 42. The controller 26, the I/O devices 30, 32, 34, and the field devices 40, 42 generally make up the process control system 14 of the process control/safety control node 12.

The process controller 26, which may be, by way of example only, a DeltaV^{™} controller sold by Emerson Process Management or any other desired type of process controller, is programmed to provide process control functionality using the I/O devices 30, 32, 34 and the field devices 40, 42. In particular, the processor 28 of the controller 26 implements or oversees one or more control processes or control strategies in cooperation with the field devices 40, 42 and the workstations 17 to control the process plant 10 or a portion of the process plant in any desired manner. The field devices 40, 42 may be any desired type, such as sensors, valves, transmitters, positioners, etc., and may conform to any desired open, proprietary, or other communication or programming protocol including, for example, the HART or the 4-20 ma protocol (as illustrated for the field devices 40), any bus protocol such as the Foundation^{®} Fieldbus protocol (as illustrated for the field devices 42), or the CAN, Profibus, and AS-Interface protocols, to name but a few. Similarly, each of the I/O devices 30, 32, 34 may be any known type of process control I/O device using any appropriate communication protocol.

The controller 26 may be configured to implement the control process or the control strategy in any desired manner. For example, the controller 26 may implement a control strategy using what are commonly referred to as function blocks, wherein each function block is a part or object of an overall control routine and operates in conjunction with other function blocks (via communications called links) to implement process control loops within the process control system 14. Function blocks typically perform one of: an input function such as that associated with a transmitter, a sensor, or other process parameter measurement device; a control function such as that associated with a control routine that performs PID, fuzzy logic, etc. control; or, an output function that controls the operation of some device such as a valve to perform some physical function within the process control system 14. Hybrids of these function blocks, as well as other types of function blocks, may also exist. While the description of the control system is provided herein using a function block control strategy that incorporates an object oriented programming paradigm, the control strategy or control routines or control loops or control modules could also be implemented or designed using other conventions, such as ladder logic or sequential function charts, for example, or using any other desired programming language or paradigm.

For the purposes of this disclosure, the terms control strategy, control routine, control module, control function block, safety module, safety logic module, and control loop essentially denote a control program executed to control the process and these terms may be interchangeably used herein. However, for the purposes of the following discussion, the term control module will be used. It should further be noted that control module described herein may have parts thereof implemented or executed on by different controllers or other devices if so desired. In addition, the control modules described herein to be implemented within the process control system 14 and/or the safety system 16 may take any form, including software, firmware, hardware, and any combination thereof. For example, the control modules, which may be control routines or any part of a control procedure such as a subroutine or parts of a subroutine (such as lines of code), may be implemented in any desired software format, such as using ladder logic, sequential function charts, control routine diagrams, object oriented programming or any other software programming language or design paradigm. Likewise, the control modules described herein may be hard-coded into, for example, one or more EPROMs, EEPROMs, application specific integrated circuits (ASICs), programmable logic controllers (PLCs), or any other hardware or firmware elements. The control modules may be designed using any design tools, including graphical design tools or any other type of software/hardware/firmware programming or design tools.

One or more control modules 36 may be stored on memory 38 in the controller 26 and executed on the processor 28 of the controller 26, which is typically the case when these function blocks are used or associated with standard 4-20 ma devices and some types of smart field devices such as HART devices. The control modules 36 may also be stored on other memory locations 19, 21 within the system 10 or implemented by the field devices 40, 42 themselves, which may be the case with Fieldbus devices.

The safety system 16 of the process control/safety control node 12 includes one or more safety system logic solvers 50, 52. Each of the logic solvers 50, 52 is a safety controller (also invariably referred to as an I/O device) having a processor 54 capable of executing safety logic modules 58. The safety logic modules 58, which may be similar to the control modules 36, may be stored in a memory 56 location of one or both logic solvers 50, 52. The logic solvers 50, 52 are communicatively connected to provide control signals to and/or receive signals from safety system field devices 60, 62. The safety controllers 50, 52 and the safety system field devices 60, 62 generally make up the safety system 16 of FIG. 1.

The safety field devices 60, 62 may be any desired type of field device conforming to or using any known or desired communication protocol, such as those mentioned above. In particular, the field devices 60, 62 may be safety-related field devices of the type that are conventionally controlled by a separate, dedicated safety-related control system, such as a liquid level detector or an emergency shutdown (ESD) valve. In the process plant 10 illustrated in FIG. 1, the safety field devices 60 are depicted as using a dedicated or point-to-point communication protocol, such as the HART or the 4-20 ma protocol, while the safety field devices 62 are illustrated as using a bus communication protocol, such as a Fieldbus protocol. Generally, the safety devices (both the controllers 50, 52 and the safety system field devices 60, 62) used as part of the safety system 16 will be rated as safety devices, which typically means that these devices must go through a rating procedure to be rated by an appropriate body as a safety device.

The backplane 24 (indicated by a dashed line through the process controller 26, the I/O devices 30, 32, 34, and the safety controllers 50, 52) is used to connect the process controller 26 to the process control I/O cards 30, 32, 34 as well as to the safety controllers 50, 52. The process controller 26 is also communicatively coupled to the bus 22 and operates as a bus arbitrator to enable each of the I/O devices 30, 32, 34 and the safety controllers 50, 52 to communicate with any of the workstations 17 or the memory device 21 via the bus 22. The backplane 24 also enables the safety controllers 50, 52 to communicate with one another and coordinate safety functions implemented by each of these devices, to communicate data to one another, or to perform other integrated functions.

The workstations 17 may each include a workstation processor 18 and a memory 19. One or more control modules 36 and/or safety logic modules 58 may be stored on the memory 19 and may be capable of being executed by any of the processors 18, 28, 54 within the process plant 10. In general, one or more of the modules 36, 58 may be executed by one of the processors to control and/or monitor a process via one or more field devices 40, 42, 60, 62. A display module 48 is illustrated in an exploded view in FIG. 1 as being stored in the memory 19 of one of the workstations 17. However, if desired, the display module 48 may be stored and executed in a different workstation 17 or in another computing device associated with the process plant 10. The display module 48 may be any type of interface that, for example, enables a user to manipulate data values (for example, perform reads or writes) to thereby alter operation of the control 36 or safety modules 58 within either or both of the control system 12 and the safety system 14. Thus, if a write is specified to be made to the control module 36 associated with the control system 12 or to one of the field devices 40, 42, for example, the display module 48 enables that write to take place. Additionally, if the write is specified to be made to the safety logic module 58 associated with the safety system 14 or to one of the field devices 60, 62, for example, the display module 48 enables that write to occur.

By and large, a control system includes a controller that is configured to respond to a target or an occurrence of an event trigger associated with a process condition. One or more control modules may be executed by one or more processors to monitor and/or control the process via one or more field devices. Process or safety information is attained by the field device and passed on to the controller wherein the controller may adjust the process, if necessary. For example, in a level control system, a controller may monitor the process for the occurrence of an event trigger relating to a liquid level exceeding an upper threshold limit within a holding tank. The controller may utilize a sensor to detect the position of a device such as a float or displacer situated within the liquid. Should the displacer exceed the upper threshold limit, the sensor will be tripped and related information may be provided to the controller. The controller may store and/or report the information to control personnel and/or adjust a set-point or position of another field device, such as a valve, to prevent liquid from entering the holding tank.

In some control systems, there may be one or more components that are required to move during normal operation, and yet some of these components may be normally inactive or idle during a significant portion of its operation. For example, the movable components associated with the detecting mechanism of a high-level sensor may be idle for a considerable amount of time if the liquid level rarely reaches the upper threshold limit. However, when the liquid level does rise to the upper threshold limit, there is a concern that the movable components of the sensor may not function properly due to the prolonged inactivity. To validate that the field device is available and to ensure its operability, a diagnostic check of the field device may be performed wherein the controller may simulate the occurrence of the event trigger to trip the sensor portion by moving the movable components of the field device. The periodic excitation of the movable components may protect against the sedentary nature of the high-level detecting field device and its normally "dry" state of operation. After excitation of the movable components of the field device, the controller may record the operation and take the necessary actions depending on the observed proper or improper result, such as recording and/or transmitting corresponding information associated with the diagnostic check and adjusting other field devices in the control system.

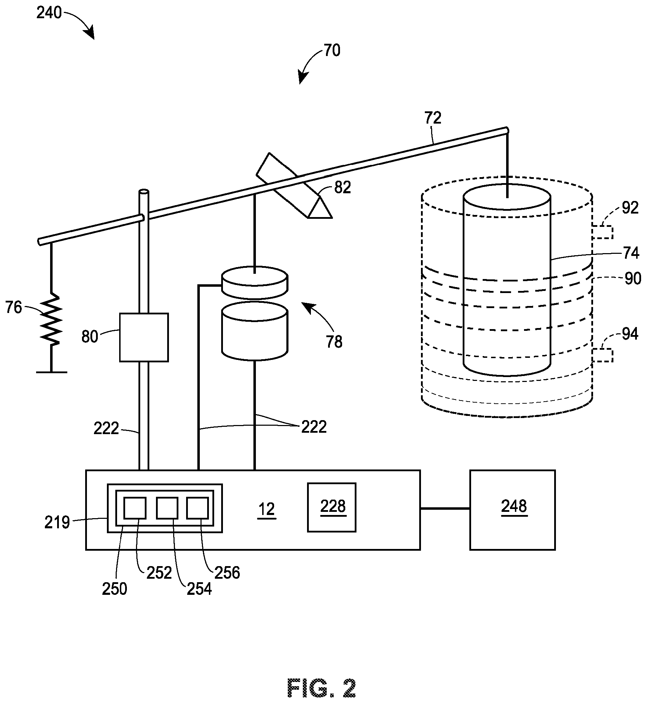

One example implementation of the present invention for validating the availability and operability of a field device 240 used in a control system 12 of a process plant is shown in Fig. 2. In this implementation, the field device 240 is used to monitor and control a level of liquid in a holding tank 90, which is shown in phantom lines in Fig. 2 and generally includes an inlet 92 and an outlet 94. However, it is to be understood that any other type of field device having a movable portion, such as a valve or switch used for any other type of corresponding function, may be integrated with the system and method of the invention. The field device 240 includes a movable assembly 70 having an elongated member such as a bar or rod 72 operatively attached to a fulcrum 82. A displacer or float device 74 is connected to the distal end of the bar 72. The bar 72 moves or pivots about the fulcrum 82 in response to movement of the displacer 74. A zero spring 76 may be attached to the proximate end of the bar 72 and may be used as desired by control personnel to adjust the field device 240 for operation with respect to the displacer's 74 characteristics and/or the expected operating environment.

The displacer 74 includes one or more characteristics, such as a mass, volume, and buoyancy, for example, and is situated within the liquid of the holding tank 90. The displacer 74 is responsive to its operating environment and, in particular, to one or more properties or characteristics of the liquid, such as the level, viscosity, density, and temperature, for example. The displacer 74 essentially floats within the liquid held within the holding tank 90 and is adaptable to the fluctuating level of the liquid. The position of the displacer 74 within the liquid of the holding tank 90 is monitored by a processor 228 via a communication link or bus 222 and related information may be provided to control personnel at any of the workstations within the plant.

An actuator 78 is operatively connected to the movable assembly 70. In the example embodiment shown in Fig. 2, the actuator 78 is connected between the bar 72 and the control node 12. The actuator 78 may be any type of device that is capable of imparting movement to the movable assembly 70, such as to replicate movement of the displacer 74 resulting from a changing liquid level. The actuator 78 may be an electric, mechanical, or electromechanical device, such as a solenoid or electromagnet, for example. The processor 228, which is coupled to the actuator 78 via the communication line or bus 222, is capable of actuating the actuator 78 and facilitating movement of the displacer 74.

Control modules 250, which may include one or more diagnostic modules, are stored on a memory 219 that is communicatively coupled to the processor 228. When executed on the processor 228, the diagnostic module is capable of performing a diagnostic check, or a portion of a diagnostic check, on the field device 240. For example, the diagnostic module may include: an actuating module 252 that facilitates actuating the actuator 78, an exhibiting module 254 that facilitates exhibiting the result of the diagnostic check at an output device 248, and an analyzing module 256 that may analyze and compare the results of one or more diagnostic checks. The diagnostic module includes commands or instructions that may be sent to the actuator 78, via the processor 228, to impart movement to the displacer 74. The commands may be initiated by control personnel and discretely transmitted via the processor 228 as needed and/or the commands may be programmed for periodic transmission or in response to an event trigger, such as the passage of a period of inactivity for the field device 240, for example. Control personnel may designate the time and/or the event trigger for executing the diagnostic check of the level control field device 240, which may provide increased flexibility in maintaining the field device 240. All formulations, comparisons, and determinations involving the diagnostic check and any subsequent response action may be administered through the cooperation of the control node 12.

A sensor 80 is mechanically connected and/or operatively coupled to the movable assembly 70 in any desired configuration wherein the sensor is able to measure a quantity that is representative of a characteristic of the field device 240 and/or its operating environment. A characteristic of the field device 240 or the operating environment may include the level of the liquid, the viscosity of the liquid, the buoyancy of the liquid, the density of the liquid, the mass of the displacer, the weight of the displacer, or the buoyancy of the displacer, for example. The sensor 80 is capable of converting the measured quantity into a signal of information, which may be in the form of a mechanical signal or an electrical signal, such as an analog or digital voltage, for example.

In the example implementation shown in FIG. 2, the sensor 80 is capable of measuring and/or detecting movement of the displacer 74 via the bar 72, which may be mechanically connected or operatively coupled to the actuator 78. Movement of the displacer 74 facilitated by the actuator 78 may therefore be detected by the sensor 80 via movement of the bar 72. The movement of the displacer 74 may be measured and converted to information to be provided at an output of the sensor 80. The information may be in the form of an electrical signal, such as an analog or digital voltage, or the position of a switch, for example, and is capable of being read by an observer or an operatively connected device, such as the processor 228. The processor 228 may take further action in response to the information provided by the sensor 80, and/or the information may be displayed visually and/or audibly at an output device 248 and/or stored on memory 219 within the control node 12.

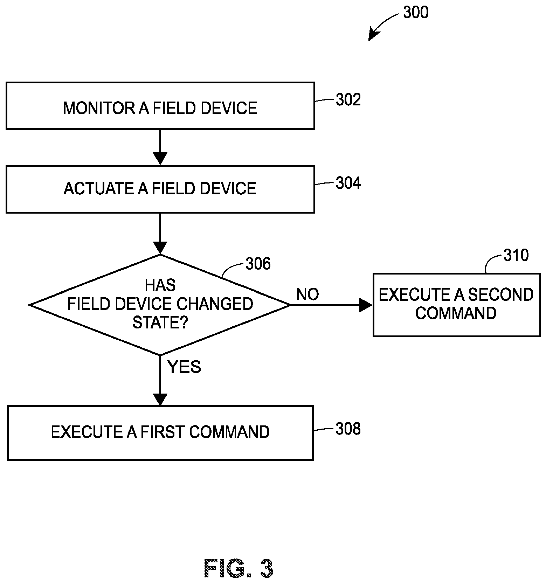

FIG. 3 depicts a flowchart 300 of an example method of the invention that may be used with the configuration shown in FIG. 2 where the operability and/or availability of the field device 240 can be validated on a discrete or periodic basis. In particular, the field device 240 can be checked to ensure that the displacer 74 is movable and capable of functioning properly. Movement of the displacer 74 is monitored by the processor 228 via the sensor 80 (block 302). The output of the sensor 80 may include one or more states. For example, a first state may be associated with a portion of the field device 240 being at a first position, such as the displacer 74 being at a position below a predetermined level, while a second state may be associated with the displacer 74 being at a second position at or above the predetermined level. The actuator 78 is actuated via execution of an actuation module 250 by the processor 228 (block 304). The actuation module 250 may be stored in one of the memory locations in the control system. After the actuator 78 is actuated by the processor 228, the state of the sensor 80, or whether the sensor has changed its state, is determined by the processor 228 (block 306). If the sensor 80 has changed state, the processor 228 may execute a first command (block 308). The first command may include recording the resultant state in one or more memory devices and/or exhibiting the result via execution of the exhibiting module 254. The resultant state may be visually and/or audibly presented at the output device 248 of one or more user interfaces or workstations in the control system. Alternatively, if the sensor 80 has not changed state, the processor 228 may execute a second command (block 310). The second command may include recording the resultant state in one or more memory devices and/or presenting the result visually and/or audibly, via the exhibiting module 254, at the output device 248 of one or more user interfaces or workstations in the control system.

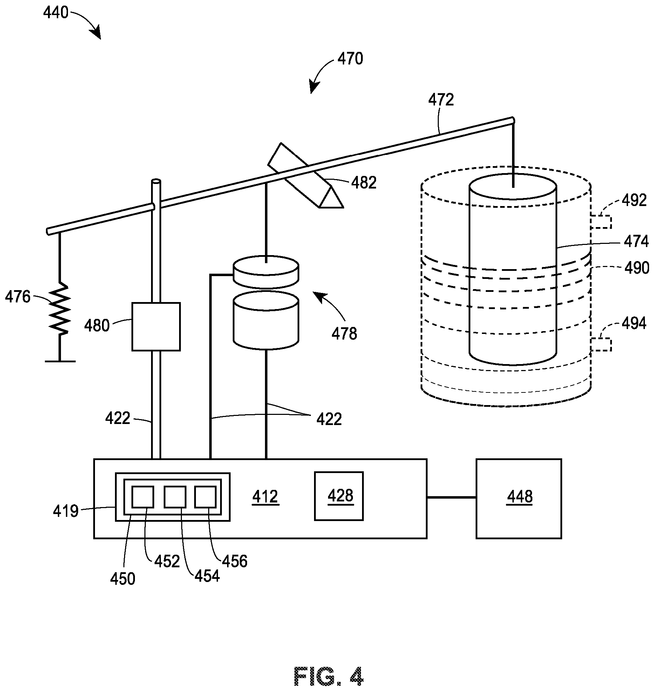

Another example embodiment of the invention for validating the operability and availability of a field device integrated in a control system is shown in FIG. 4. The field device 440 in this example embodiment is used to monitor and control the level of liquid within a holding tank 490, which is shown in phantom lines in Fig. 4 and generally includes an inlet 492 and an outlet 494. However, it is to be understood that the field device may be any other type of field device having a movable portion, such as a valve or switch that may be integrated with the system and method of the invention. The field device 440 includes a movable assembly 470 having an elongated member such as a bar or rod 472 operatively attached to a fulcrum 482. A displacer or float device 474 is connected to the distal end of the bar 472. The bar 472 moves or pivots about the fulcrum 482 in response to movement of the displacer 474. A zero spring 476 may be attached to the proximate end of the bar 472 and may be used to adjust the field device 440 with respect to the displacer's 474 characteristics and/or the expected operating environment.

The displacer 474 includes one or more characteristics, such as a mass, volume, and buoyancy, for example, and is situated within the liquid of the holding tank 490. The displacer 474 is responsive to its operating environment and, in particular, to one or more properties or characteristics of the liquid, such as the level, viscosity, density, and temperature, for example. The displacer 474 essentially floats within the liquid held within the holding tank 490 and is adaptable to the fluctuating level of the liquid. The position of the displacer 474 within the liquid of the holding tank 490 is monitored by a processor 428 via a communication link or bus 422 and related information may be provided to control personnel at any of the workstations within the plant.

An actuator 478 is operatively connected to the movable assembly 470 and may be connected between the bar 472 and the processor 428 of the control node 412. The actuator 478 may be any type of device that is capable of imparting movement to the movable assembly 470, which ultimately causes movement to the displacer 474. The actuator 478 may be an electric, mechanical, or electromechanical device, such as a solenoid or electromagnet, for example. The processor 428, which is coupled to the actuator 478 via a communication line or bus 422, is capable of actuating the actuator 478 and facilitating movement of the displacer 474.

Control modules 450, which may include one or more diagnostic modules, are stored on a memory 419 that is communicatively coupled to the processor 428. When executed on the processor 428, the diagnostic module is capable of performing a diagnostic check, or a portion of a diagnostic check, on the field device 440. For example, the diagnostic modules may include: an actuating module 452 that facilitates actuating the actuator 478, an exhibiting module 454 that facilitates exhibiting the result of the diagnostic check at an output device 448, and an analyzing module 456 that may analyze and compare the results of one or more diagnostic checks. The diagnostic module includes commands or instructions that may be sent to the actuator 478, via the processor 428, to impart movement to the displacer 474. The commands may be initiated by control personnel and discretely transmitted via the processor 428 as needed and/or the commands may be programmed for periodic transmission or in response to an event trigger, such as the passage of an inactive period for the field device 440, for example. Control personnel may designate one or more times or event triggers for executing the diagnostic check of the level control field device 440, which may provide increased flexibility in maintaining the field device 440. All formulations, comparisons, and determinations involving the diagnostic check and any subsequent response action may be administered through the cooperation of the control node 412.

The operating environment and/or one or more characteristics of the displacer 474 may be monitored by the processor 428 via a sensor 480 mechanically connected and/or electrically coupled to the movable assembly 470. The sensor 480 may be a discrete or digital sensor capable of receiving and/or taking one or more measurements of a quantity that is representative of the operating environment or one or more of the characteristics of the field device 440. Alternately, the sensor 480 may be a proportional or analog sensor capable of continuously receiving and/or measuring a quantity or that is representative of the operating environment or one or more of the characteristics of the field device 440. A characteristic of the field device 440 or the operating environment may include the level of the liquid, the viscosity of the liquid, the buoyancy of the liquid, the density of the liquid, the mass of the displacer, the weight of the displacer, or the buoyancy of the displacer, for example. The sensor 480 is capable of converting the received and/or measured quantity into a signal of information, which may be in the form of a mechanical signal or an electrical signal, such as an analog or digital voltage, for example.

The information provided by the sensor 480 may be analyzed by the control processor 428 to determine the operating condition of the displacer 474. The analysis may include a comparison of standard information to information attained through the measurement. In addition, the analysis may include a comparison of information attained through several measurements taken at different times. The standard information and the information attained by measurement may be stored in the memory 419 of the control system. Depending on the result of the comparison, the control processor 428 may store the resultant analysis in memory 419 within the control system 412 and/or display the resultant analysis visually and/or audibly at the output device 448.

In the implementation shown in FIG. 4, the processor 428 is capable of actuating the actuator 478 to lift the displacer 474 out of the liquid. Upon the return of the displacer 474 to the liquid, the continuous sensor 480, which may include a Hall effect sensor, may receive continuous measurements related to the displacer's 474 position within the liquid. More specifically, after returning back into the liquid, the displacer 474 will likely bob up and down, eventually arriving at a more steady position in the liquid. During this time, the sensor 480 may attain information related to the displacer's 474 bobbing, for example, the frequency, amplitude, dampening, and/or resonance of the bobbing displacer. This information may be related to the characteristics of the displacer 474 and/or the operating environment. The sensor 480 is capable of converting the information received from the movable assembly 470 into a representative signal to be provided as an output signal to the control processor 428. The information of the representative signal may be stored in memory 419 and/or analyzed via the analyzing module 456 and compared against other related information stored in memory to determine if a change has occurred in the operating characteristic of the displacer 474 and/or the operating environment. The information may also be compared to an information standard to assist in determining whether one or more of the characteristics of the displacer are in proper working order or whether the operating environment has changed.

An analysis of the information may uncover that one or more characteristics of the displacer 474 have changed from its initial condition. Any change to the displacer's characteristics may affect the measurement capability and accuracy of the field device 440 and repair or replacement of the displacer 474 may be needed. For example, paraffin and other foreign substances have been known to attach to a displacer during use, which may affect the buoyant characteristics of the displacer. The change in the buoyant characteristic of the displacer may be deduced through an observed change in the frequency, amplitude, dampening, and/or resonance of the bobbing displacer.

The analysis of the information may also uncover that the operating environment of the displacer has changed from its initial condition. In particular, any change to the fluid within the holding tank 490 may be detectable by a change in respect to the initially measured characteristics of the displacer 474. That is, if a different liquid was added to the holding tank 490, a change in the viscosity, density, or grade of the liquid may be detectable by a change in the frequency, amplitude, dampening, and/or resonance of the displacer 474. Thus, by knowing the characteristic property(ies) of the displacer 474 and the environment in which the displacer is expected to operate in, changes detected in any of the characteristic property(ies) of the displacer may represent a change in the operating condition of the displacer or the operating environment of the displacer, such as the level or density of the liquid.

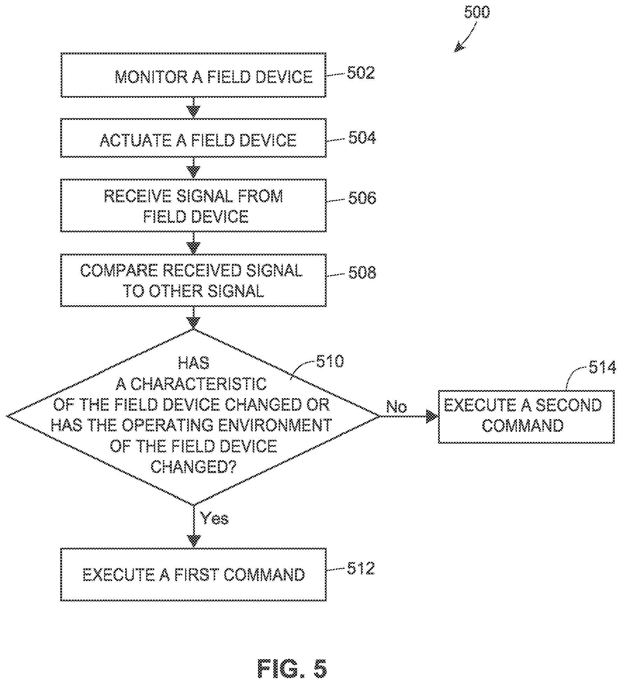

FIG. 5 depicts a flowchart 500 of an example method of the invention capable of being utilized with the embodiment shown in FIG. 4 where the operability of the sensor 480 can be validated on a continuing basis via the proportional sensor 480. In particular, the processor of the controller continuously monitors the field device via the proportional sensor (block 502). The actuator 480 is actuated by the controller (block 504) and the displacer 474 is lifted from the liquid and allowed to return to the liquid. A continuous signal is received at the sensor 480, converted, and provided to the controller (block 506) for analysis. The analysis may include comparing the most recently received output signal to a standard of information associated with the characteristics of the displacer and/or the displacer's operating characteristics, or the analysis may include comparing the most recently received output signal to a previously received output signal or a compilation of previously received output signals (block 508). The controller 412 determines, via execution of the analyzing module on the processor 428, whether a change occurred to the initially measured characteristics of the displacer (block 510) and/or the operating environment. If there was a significant change to one or more of the displacer's characteristics and/or the operating environment, the processor 412 may execute a first command (block 512). The first command may include recording this result in memory 419 and/or displaying the result visually and/or audibly at the user interface 448. In addition, the first command may include displaying and/or logging an alarm associated with the changed signal. If there was not a sufficient change to the displacer's characteristics, the processor 428 may execute a second command (block 514). The second command may include recording this result in memory 419 and/or displaying the result visually and/or audibly at one or more user interfaces within the control plant. Displaying the status of the device may be facilitated by one or more of the processors executing the indicating module.

Past validation techniques for liquid holding tanks incorporating level control field devices required control personnel to be present at the site of the field device. In addition, for holding tanks with integrated bridles, the level control system must be suspended while the bridle is removed, drained, refilled, and checked. It is apparent from the description above that the present invention is readily adaptable to existing electromechanical level control systems and is capable of providing a quick and accurate assessment of the components and operating environment of a remote field device without interruption to the control system and without the need for control personnel to be present at the site of the field device.

Although certain example methods, apparatus and articles of manufacture have been described herein, the scope of coverage of this patent is not limited thereto. On the contrary, this patent covers all methods, apparatus, and articles of manufacture fairly falling within the scope of the appended claims either literally or under the doctrine of equivalents.

Throughout this specification, plural instances may implement components, operations, or structures described as a single instance. Although individual operations of one or more methods are illustrated and described as separate operations, one or more of the individual operations may be performed concurrently, and nothing requires that the operations be performed in the order illustrated. Structures and functionality presented as separate components in example configurations may be implemented as a combined structure or component. Similarly, structures and functionality presented as a single component may be implemented as separate components. These and other variations, modifications, additions, and improvements fall within the scope of the subject matter herein.

For example, the control system 10 may include, but is not limited to, any combination of a LAN, a MAN, a WAN, a mobile, a wired or wireless network, a private network, or a virtual private network. Moreover, while only two workstations are illustrated in Fig. 1 to simplify and clarify the description, it is understood that any number of workstations or user interfaces are supported and can be implemented.

Additionally, certain embodiments are described herein as including logic or a number of components, modules, or mechanisms. Modules may constitute either software modules (e.g., code embodied on a machine-readable medium or in a transmission signal) or hardware modules. A hardware module is tangible unit capable of performing certain operations and may be configured or arranged in a certain manner. In example embodiments, one or more computer systems (e.g., a standalone, client or server computer system) or one or more hardware modules of a computer system (e.g., a processor or a group of processors) may be configured by software (e.g., an application or application portion) as a hardware module that operates to perform certain operations as described herein.

In various embodiments, a hardware module may be implemented mechanically or electronically. For example, a hardware module may comprise dedicated circuitry or logic that is permanently configured (e.g., as a special-purpose processor, such as a field programmable gate array (FPGA) or an application-specific integrated circuit (ASIC)) to perform certain operations. A hardware module may also comprise programmable logic or circuitry (e.g., as encompassed within a general-purpose processor or other programmable processor) that is temporarily configured by software to perform certain operations. It will be appreciated that the decision to implement a hardware module mechanically, in dedicated and permanently configured circuitry, or in temporarily configured circuitry (e.g., configured by software), may be driven by cost and time considerations.

Accordingly, the term hardware should be understood to encompass a tangible entity, be that an entity that is physically constructed, permanently configured (e.g., hardwired), or temporarily configured (e.g., programmed) to operate in a certain manner or to perform certain operations described herein. Considering embodiments in which hardware modules are temporarily configured (e.g., programmed), each of the hardware modules need not be configured or instantiated at any one instance in time. For example, where the hardware modules comprise a general-purpose processor configured using software, the general-purpose processor may be configured as respective different hardware modules at different times. Software may accordingly configure a processor, for example, to constitute a particular hardware module at one instance of time and to constitute a different hardware module at a different instance of time.

Hardware and software modules can provide information to, and receive information from, other hardware and/or software modules. Accordingly, the described hardware modules may be regarded as being communicatively coupled. Where multiple of such hardware or software modules exist contemporaneously, communications may be achieved through signal transmission (e.g., over appropriate circuits and buses) that connect the hardware or software modules. In embodiments in which multiple hardware modules or software are configured or instantiated at different times, communications between such hardware or software modules may be achieved, for example, through the storage and retrieval of information in memory structures to which the multiple hardware or software modules have access. For example, one hardware or software module may perform an operation and store the output of that operation in a memory device to which it is communicatively coupled. A further hardware or software module may then, at a later time, access the memory device to retrieve and process the stored output. Hardware and software modules may also initiate communications with input or output devices, and can operate on a resource (e.g., a collection of information).

The various operations of example methods described herein may be performed, at least partially, by one or more processors that are temporarily configured (e.g., by software) or permanently configured to perform the relevant operations. Whether temporarily or permanently configured, such processors may constitute processor-implemented modules that operate to perform one or more operations or functions. The modules referred to herein may, in some example embodiments, comprise processor-implemented modules.

Similarly, the methods or routines described herein may be at least partially processor-implemented. For example, at least some of the operations of a method may be performed by one or processors or processor-implemented hardware modules. The performance of certain of the operations may be distributed among the one or more processors, not only residing within a single machine, but deployed across a number of machines. In some example embodiments, the processor or processors may be located in a single location (e.g., within a plant environment, an office environment, or as a server farm), while in other embodiments the processors may be distributed across a number of locations.

The one or more processors may also operate to support performance of the relevant operations in a "cloud computing" environment or as a "software as a service" (SaaS). For example, at least some of the operations may be performed by a group of computers (as examples of machines including processors), these operations being accessible via a network (e.g., the Internet) and via one or more appropriate interfaces (e.g., application program interfaces (APIs).)

The performance of certain of the operations may be distributed among the one or more processors, not only residing within a single machine, but deployed across a number of machines. In some example embodiments, the one or more processors or processor-implemented modules may be located in a single geographic location (e.g., within a plant or office environment). In other example embodiments, the one or more processors or processor-implemented modules may be distributed across a number of geographic locations.

Some portions of this specification are presented in terms of algorithms or symbolic representations of operations on data stored as bits or binary digital signals within a machine memory (e.g., a computer memory). These algorithms or symbolic representations are examples of techniques used by those of ordinary skill in the data processing arts to convey the substance of their work to others skilled in the art. As used herein, an "algorithm" or a "routine" is a self-consistent sequence of operations or similar processing leading to a desired result. In this context, algorithms, routines and operations involve physical manipulation of physical quantities. Typically, but not necessarily, such quantities may take the form of electrical, magnetic, or optical signals capable of being stored, accessed, transferred, combined, compared, or otherwise manipulated by a machine. It is convenient at times, principally for reasons of common usage, to refer to such signals using words such as "data," "content," "bits," "values," "elements," "symbols," "characters," "terms," "numbers," "numerals," or the like. These words, however, are merely convenient labels and are to be associated with appropriate physical quantities.

Unless specifically stated otherwise, discussions herein using words such as "processing," "computing," "calculating," "determining," "presenting," "displaying," or the like may refer to actions or processes of a machine (e.g., a computer) that manipulates or transforms data represented as physical (e.g., electronic, magnetic, or optical) quantities within one or more memories (e.g., volatile memory, non-volatile memory, or a combination thereof), registers, or other machine components that receive, store, transmit, or display information.

As used herein any reference to "one embodiment" or "an embodiment" means that a particular element, feature, structure, or characteristic described in connection with the embodiment is included in at least one embodiment. The appearances of the phrase "in one embodiment" in various places in the specification are not necessarily all referring to the same embodiment.

Some embodiments may be described using the expression "coupled" and "connected" along with their derivatives. For example, some embodiments may be described using the term "coupled" to indicate that two or more elements are in direct physical or electrical contact. The term "coupled," however, may also mean that two or more elements are not in direct contact with each other, but yet still co-operate or interact with each other. The embodiments are not limited in this context.

As used herein, the terms "comprises," "comprising," "includes," "including," "has," "having" or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of the "a" or "an" are employed to describe elements and components of the embodiments herein. This is done merely for convenience and to give a general sense of the description. This description should be read to include one or at least one and the singular also includes the plural unless it is obvious that it is meant otherwise.

Still further, for the purposes of illustration only, the figures depict preferred embodiments of a verification system for a field device within a control system. One skilled in the art will readily recognize from the discussion above that alternative embodiments of the structures and methods illustrated herein may be employed without departing from the principles described herein, insofar as falling under the scope of the claims.

## Claims

1. A float liquid level control system including a validation mechanism, the system comprising:
a fulcrum (82, 482);
a movable assembly (70, 470) including a bar (72, 472), wherein the bar (72, 472) of the movable assembly (70, 470) including a proximate end and a distal end, and wherein the bar (72, 472) is configured to pivot about the fulcrum (82, 482); and
a float (74, 474) attached to the distal end of the bar (72, 472); and **characterized by**:
an actuator (78, 478) that is operatively connected to the movable assembly (70, 470) between the proximate end of the bar (72, 472) and the fulcrum (82, 482) and that is configured to impart movement to the movable assembly (70, 470) to thereby move the float (74, 474);
a processor (228, 428) configured to actuate the actuator (78, 478) to thereby move the float (74, 474) via the movable assembly (70, 470);
a sensor (80, 480) including an input and an output, the input of the sensor (80, 480) operatively coupled to the movable assembly (70, 470) for receiving an input signal representative of a characteristic of the float (74, 474), the output of the sensor (80, 480) operatively coupled to the processor (228, 428) for providing an output signal associated with the input signal;
a memory (219, 419) coupled to the processor (228, 428);
an actuating module (252, 452) stored on the memory (219, 419) and configured to be executed on the processor (228, 428), thereby causing the processor (228, 428) to actuate the actuator (78, 478);
an output device (248, 448) coupled to the processor (228, 428); and
an exhibiting module (254, 454) stored on the memory (219, 419) and configured to be executed on the processor (228, 428), thereby causing the processor (228, 428) to exhibit the output signal of the sensor (80, 480) on the output device (248, 448).

2. The float level control system of claim 1, wherein the output signal of the sensor (80, 480) includes a discrete value representative of the characteristic of the float (74, 474) or an operating environment.

3. The float level control system of claim 2, wherein the discrete value indicates a first state corresponding to the float (74, 474) positioned below a predetermined level or a second state corresponding to the float (74, 474) positioned at or above the predetermined level.

4. The float level control system of any of the preceding claims, wherein the output signal of the sensor (80, 480) includes a continuous value representative of the characteristic of the float (74, 474) or an operating environment.

5. The float level control system of any of the preceding claims, further comprising:
at least one previous output signal of the sensor (80, 480) stored on the memory (219, 419);
an analyzing module (256, 456) stored on the memory (219, 419) configured to be executed on the processor (228, 428) to compare the output signal of the sensor (80, 480) to the at least one previous output signal of the sensor (80, 480).

6. The float level control system of any of the preceding claims, wherein the characteristic of the float (74, 474) includes at least one of the following: level position of the float (74, 474), weight of the float (74, 474), mass of the float (74, 474), density of a liquid, buoyancy of the liquid, and viscosity of the liquid.

7. The float level control system of any of the preceding claims, wherein the sensor (80, 480) includes a Hall effect sensor.

8. The float level control system of any of the preceding claims, further comprising a zero spring (76, 476) attached to the proximate end of the bar (72, 472).

9. A method (300, 500) of validating a level control system including a controller (12, 412) coupled to an actuator (78, 478) and a movable assembly (70, 470), wherein the movable assembly (70, 470) includes a bar (72, 472), wherein the bar (72, 472) includes a proximate end and a distal end, wherein the level control system further includes a fulcrum (82, 482), and wherein the bar (72, 472) is configured to pivot about the fulcrum (82, 482), the method (300, 500) **characterized by**:
providing a float (74, 474) connected to the distal end of the bar (72, 472) of the movable assembly (70, 470), and a sensor (80, 480) for measuring a physical quantity representative of a characteristic of the float (74, 474) or a float operating environment coupled between the movable assembly (70, 470) and the controller, wherein the sensor (80, 480) is operatively connected to the movable assembly (70, 470) between the proximate end of the bar (72, 472) and the fulcrum (82, 482);
actuating the actuator (78, 478) to move the float (74, 474), wherein the actuator (78, 478) is operatively connected to the movable assembly (70, 470) between the proximate end of the bar (72, 472) and the fulcrum (82, 482);
receiving an input representative of a characteristic of the float (74, 474) or the float operating environment;
receiving an output signal from a sensor (80, 480) coupled to the movable assembly (70, 470); and
exhibiting a state of the float (74, 474).

10. The method of claim 9, further comprising:
comparing the output signal from the sensor (80, 480) to a previous output signal from the sensor (80, 480) stored on and retrieved from a memory device.

## Patentansprüche

1. Schwimmer-Flüssigkeit-Niveau-Steuerungssystem, welches einen Validierungsmechanismus aufweist, wobei das System aufweist:
einen Drehpunkt (82, 482);
eine bewegbare Baugruppe (70, 470), welche einen Stab (72, 472) aufweist, wobei der Stab (72, 472) der bewegbaren Baugruppe (70, 470) ein proximales Ende und ein distales Ende aufweist, und wobei die Stange (72, 472) eingerichtet ist, um um den Drehpunkt (82, 482) herum zu schwenken; und
einen Schwimmer (74, 474), welcher an dem distalen Ende der Stange (72, 472) angebracht ist; und **gekennzeichnet durch**:
einen Aktuator (78, 478), welcher mit der bewegbaren Baugruppe (70, 470) zwischen dem proximalen Ende der Stange (72, 472) und dem Drehpunkt (82, 482) operativ verbunden ist und welcher eingerichtet ist, um eine Bewegung an die bewegbare Baugruppe (70, 470) weiterzugeben, um dadurch den Schwimmer (74, 474) zu bewegen;
einen Prozessor (228, 428), welcher eingerichtet ist, um den Aktuator (78, 478) zu betätigen, um dadurch den Schwimmer (74, 474) via die bewegbare Baugruppe (70, 470) zu bewegen;
einen Sensor (80, 480), welcher einen Eingang und einen Ausgang aufweist, wobei der Eingang des Sensors (80, 480) mit der bewegbaren Baugruppe (70, 470) zum Empfangen eines Eingangssignals, das für eine Eigenschaft des Schwimmers (74, 474) repräsentativ ist, operativ gekoppelt ist, wobei der Ausgang des Sensors (80, 480) mit dem Prozessor (228, 428) zum Bereitstellen eines Ausgangssignals, welches mit dem Eingangssignal assoziiert ist, operativ gekoppelt ist;
einen Speicher (219, 419), welcher mit dem Prozessor (228, 428) gekoppelt ist;
ein Betätigungsmodul (252, 452), welches in dem Speicher (219, 419) gespeichert ist und welches eingerichtet ist, um auf dem Prozessor (228, 428) ausgeführt zu werden, wodurch der Prozessor (228, 428) veranlasst wird, den Aktuator (78, 478) zu betätigen;
ein Ausgabevorrichtung (248, 448), welche mit dem Prozessor (228, 428) gekoppelt ist; und
ein Darstellungsmodul (254, 454), welches in dem Speicher (219, 419) gespeichert ist und welches eingerichtet ist, um auf dem Prozessor (228, 428) ausgeführt zu werden, wodurch der Prozessor (228, 428) veranlasst wird, das Ausgangssignal des Sensors (80, 480) auf der Ausgabevorrichtung (248, 448) darzustellen.

2. Schwimmer-Niveau-Steuerungssystem gemäß Anspruch 1, wobei das Ausgangssignal des Sensors (80, 480) einen diskreten Wert aufweist, der für die Eigenschaft des Schwimmers (74, 474) oder eine Betriebsumgebung repräsentativ ist.

3. Schwimmer-Niveau-Steuerungssystem gemäß Anspruch 2, wobei der diskrete Wert einen ersten Zustand, welcher mit dem Schwimmer (74, 474) korrespondiert, der sich unterhalb eines vorbestimmten Niveaus befindet, oder einen zweiten Zustand, der mit dem Schwimmer (74, 474) korrespondiert, der sich auf oder über dem vorbestimmten Niveau befindet, angibt.

4. Schwimmer-Niveau-Steuerungssystem gemäß irgendeinem der vorhergehenden Ansprüche, wobei das Ausgangssignal des Sensors (80, 480) einen kontinuierlichen Wert aufweist, der für die Eigenschaft des Schwimmers (74, 474) oder eine Betriebsumgebung repräsentativ ist.

5. Schwimmer-Niveau-Steuerungssystem gemäß irgendeinem der vorhergehenden Ansprüche, welches ferner aufweist:
mindestens ein vorheriges Ausgangssignal des Sensors (80, 480), welches in dem Speicher (219, 419) gespeichert ist;
ein Analysemodul (256, 456), welches in dem Speicher (219, 419) gespeichert ist und welches eingerichtet ist, um auf dem Prozessor (228, 428) ausgeführt zu werden, um das Ausgangssignal des Sensors (80, 480) mit dem mindestens einen vorherigen Ausgangssignal des Sensors (80, 480) zu vergleichen.

6. Schwimmer-Niveau-Steuerungssystem gemäß irgendeinem der vorhergehenden Ansprüche, wobei die Eigenschaft des Schwimmers (74, 474) mindestens eine der folgenden aufweist: Niveau-Position des Schwimmers (74, 474), Gewicht des Schwimmers (74, 474), Masse des Schwimmers (74, 474), Dichte einer Flüssigkeit, Auftrieb der Flüssigkeit und Viskosität der Flüssigkeit.

7. Schwimmer-Niveau-Steuerungssystem gemäß irgendeinem der vorhergehenden Ansprüche, wobei der Sensor (80, 480) einen Hall-Effekt-Sensor aufweist.

8. Schwimmer-Niveau-Steuerungssystem gemäß irgendeinem der vorhergehenden Ansprüche, welches ferner eine Nullfeder (76, 476) aufweist, die am proximalen Ende der Stange (72, 472) angebracht ist.

9. Verfahren (300, 500) zum Validieren eines Niveau-Steuerungssystems, welches eine Steuerungsvorrichtung (12, 412) aufweist, welche mit einem Aktuator (78, 478) und einer bewegbaren Baugruppe (70, 470) gekoppelt ist, wobei die bewegbare Baugruppe (70, 470) eine Stange (72, 472) aufweist, wobei die Stange (72, 472) ein proximales Ende und ein distales Ende aufweist, wobei das Niveau-Steuerungssystem ferner einen Drehpunkt (82, 482) aufweist, und wobei die Stange (72, 472) eingerichtet ist, um um den Drehpunkt (82, 482) herum zu schwenken, wobei das Verfahren (300, 500) **gekennzeichnet ist durch**:
Bereitstellen eines Schwimmers (74, 474), welcher mit dem distalen Ende der Stange (72, 472) der bewegbaren Baugruppe (70, 470) verbunden ist, und eines Sensors (80, 480) zum Messen einer physikalischen Größe, die für eine Eigenschaft des Schwimmers (74, 474) oder eine Schwimmer-Betriebsumgebung repräsentativ ist, welcher zwischen der bewegbaren Baugruppe (70, 470) und der Steuerungsvorrichtung gekoppelt ist, wobei der Sensor (80, 480) mit der bewegbaren Baugruppe (70, 470) zwischen dem proximalen Ende der Stange (72, 472) und dem Drehpunkt (82, 482) operativ verbunden ist;
Betätigen des Aktuators (78, 478), um den Schwimmer (74, 474) zu bewegen, wobei der Aktuator (78, 478) mit der bewegbaren Baugruppe (70, 470) zwischen dem proximalen Ende der Stange (72, 472) und dem Drehpunkt (82, 482) operativ verbunden ist;
Empfangen einer Eingabe, die für eine Eigenschaft des Schwimmers (74, 474) oder die Schwimmer-Betriebsumgebung repräsentativ ist;
Empfangen eines Ausgangssignals von einem Sensor (80, 480), welcher mit der bewegbaren Baugruppe (70, 470) gekoppelt ist; und
Darstellen eines Zustands des Schwimmers (74, 474).

10. Verfahren gemäß Anspruch 9, welches ferner aufweist:
Vergleichen des Ausgangssignals von dem Sensor (80, 480) mit einem vorherigen Ausgangssignal von dem Sensor (80, 480), welches in einer Speichervorrichtung gespeichert ist und von dieser abgerufen wird.

## Revendications

1. Système de commande de niveau de liquide à flotteur comprenant un mécanisme de validation, le système comprenant :
un point d'appui (82, 482) ;
un ensemble mobile (70, 470) comprenant une barre (72, 472), dans lequel la barre (72, 472) de l'ensemble mobile (70, 470) comprend une extrémité proximale et une extrémité distale, et dans lequel la barre (72, 472) est configurée pour pivoter autour du point d'appui (82, 482) ; et
un flotteur (74, 474) fixé à l'extrémité distale de la barre (72, 472) ; et **caractérisé par** :
un actionneur (78, 478) qui est connecté de manière opérationnelle à l'ensemble mobile (70, 470) entre l'extrémité proximale de la barre (72, 472) et le point d'appui (82, 482) et qui est configuré pour conférer un déplacement à l'ensemble mobile (70, 470) pour déplacer ainsi le flotteur (74, 474) ;
un processeur (228, 428) configuré pour actionner l'actionneur (78, 478) pour déplacer ainsi le flotteur (74, 474) via l'ensemble mobile (70, 470) ;
un capteur (80, 480) comprenant une entrée et une sortie, l'entrée du capteur (80, 480) étant couplée de manière opérationnelle à l'ensemble mobile (70, 470) pour recevoir un signal d'entrée représentatif d'une caractéristique du flotteur (74, 474), la sortie du capteur (80, 480) étant couplée de manière opérationnelle au processeur (228, 428) pour fournir un signal de sortie associé au signal d'entrée ;
une mémoire (219, 419) couplée au processeur (228, 428) ;
un module d'actionnement (252, 452) stocké sur la mémoire (219, 419) et configuré pour être exécuté sur le processeur (228, 428), en amenant ainsi le processeur (228, 428) à actionner l'actionneur (78, 478) ;
un dispositif de sortie (248, 448) couplé au processeur (228, 428) ; et
un module d'exposition (254, 454) stocké sur la mémoire (219, 419) et configuré pour être exécuté sur le processeur (228, 428), en amenant ainsi le processeur (228, 428) à exposer le signal de sortie du capteur (80, 480) sur le dispositif de sortie (248, 448).

2. Système de commande de niveau à flotteur selon la revendication 1, dans lequel le signal de sortie du capteur (80, 480) comprend une valeur discrète représentative de la caractéristique du flotteur (74, 474) ou d'un environnement de fonctionnement.

3. Système de commande de niveau à flotteur selon la revendication 2, dans lequel la valeur discrète indique un premier état correspondant au flotteur (74, 474) positionné en dessous d'un niveau prédéterminé ou un second état correspondant au flotteur (74, 474) positionné au niveau prédéterminé ou au-dessus de celui-ci.

4. Système de commande de niveau à flotteur selon l'une quelconque des revendications précédentes, dans lequel le signal de sortie du capteur (80, 480) comprend une valeur continue représentative de la caractéristique du flotteur (74, 474) ou d'un environnement de fonctionnement.

5. Système de commande de niveau à flotteur selon l'une quelconque des revendications précédentes, comprenant en outre :
au moins un signal de sortie précédent du capteur (80, 480) stocké sur la mémoire (219, 419) ;
un module d'analyse (256, 456) stocké sur la mémoire (219, 419) configuré pour être exécuté sur le processeur (228, 428) pour comparer le signal de sortie du capteur (80, 480) au au moins un signal de sortie précédent du capteur (80, 480).

6. Système de commande de niveau à flotteur selon l'une quelconque des revendications précédentes, dans lequel la caractéristique du flotteur (74, 474) comprend au moins l'un des éléments suivants : une position de niveau du flotteur (74, 474), un poids du flotteur (74, 474), une masse du flotteur (74, 474), une densité d'un liquide, une flottabilité du liquide et une viscosité du liquide.

7. Système de commande de niveau à flotteur selon l'une quelconque des revendications précédentes, dans lequel le capteur (80, 480) comprend un capteur à effet Hall.

8. Système de commande de niveau à flotteur selon l'une quelconque des revendications précédentes, comprenant en outre un ressort de zéro (76, 476) fixé à l'extrémité proximale de la barre (72, 472).

9. Procédé (300, 500) de validation d'un système de commande de niveau comprenant un dispositif de commande (12, 412) couplé à un actionneur (78, 478) et un ensemble mobile (70, 470), dans lequel l'ensemble mobile (70, 470) comprend une barre (72, 472), dans lequel la barre (72, 472) comprend une extrémité proximale et une extrémité distale, dans lequel le système de commande de niveau comprend en outre un point d'appui (82, 482), et dans lequel la barre (72, 472) est configurée pour pivoter autour du point d'appui (82, 482), le procédé (300, 500) étant **caractérisé par** les étapes consistant à :
fournir un flotteur (74, 474) connecté à l'extrémité distale de la barre (72, 472) de l'ensemble mobile (70, 470), et un capteur (80, 480) pour mesurer une grandeur physique représentative d'une caractéristique du flotteur (74, 474) ou d'un environnement de fonctionnement de flotteur couplé entre l'ensemble mobile (70, 470) et le dispositif de commande, dans lequel le capteur (80, 480) est connecté de manière opérationnelle à l'ensemble mobile (70, 470) entre l'extrémité proximale de la barre (72, 472) et le point d'appui (82, 482) ;
actionner l'actionneur (78, 478) pour déplacer le flotteur (74, 474), dans lequel l'actionneur (78, 478) est connecté de manière opérationnelle à l'ensemble mobile (70, 470) entre l'extrémité proximale de la barre (72, 472) et le point d'appui (82, 482) ;
recevoir une entrée représentative d'une caractéristique du flotteur (74, 474) ou de l'environnement de fonctionnement de flotteur ;
recevoir un signal de sortie provenant d'un capteur (80, 480) couplé à l'ensemble mobile (70, 470) ; et
exposer un état du capteur (74, 474),

10. Procédé selon la revendication 9, comprenant en outre l'étape consistant à :
comparer le signal de sortie provenant du capteur (80, 480) à un signal de sortie précédent provenant du capteur (80, 480) stocké sur et récupéré à partir d'un dispositif de mémoire.
